Europäisches Patentamt

European Patent Office

Office européen des brevets

(19)

(11) Veröffentlichungsnummer: **0 204 202**
**B1**

(12) EUROPÄISCHE PATENTSCHRIFT

(45) Veröffentlichungstag der Patentschrift: **09.05.90**

(21) Anmeldenummer: **86106757.7**

(22) Anmeldetag: **17.05.86**

(51) Int. Cl.⁵: **B 65 G 47/51,** B 65 H 67/04,
B 65 H 67/06

(54) Anordnung zum Transportieren von Kannen für Textilmaterial.

(30) Priorität: **03.06.85 CH 2326/85**

(43) Veröffentlichungstag der Anmeldung:
**10.12.86 Patentblatt 86/50**

(45) Bekanntmachung des Hinweises auf die
Patenterteilung:
**09.05.90 Patentblatt 90/19**

(84) Benannte Vertragsstaaten:
**CH DE IT LI**

(56) Entgegenhaltungen:
**EP-A-0 069 087**
**US-A-3 125 782**
**US-A-3 884 026**
**US-A-4 012 893**
**US-A-4 059 185**

**PATENT ABSTRACTS OF JAPAN, Band 9, Nr. 34
(M-357)1757r, 14. Februar 1985; & JP - A - 59 177
260 (HOWA KOGYO K.K.) 06.10.1984**

(73) Patentinhaber: **MASCHINENFABRIK RIETER AG**
**Postfach 290**
**CH-8406 Winterthur (CH)**

(72) Erfinder: **Hera, Georg**
**Scheuchenstrasse 21/10**
**D-8500 Frauenfeld (DE)**

Courier Press, Leamington Spa, England.

## Beschreibung

Die vorliegende Erfindung bezieht sich auf eine Anordnung gemäss dem Oberbegriff des Patentanspruchs 1.

Durch das japanische Gebrauchsmuster JP—U-50-4813 ist eine derartige Anordnung bekanntgemacht, bei welcher eine Anzahl zur Aufnahme von Faserbändern dienender Kannen auf einer einen geschlossenen Kreislauf bildenden Bahn zirkuliert werden. Dabei besitzt die Bahn ein gerades Stück, damit eine leere Kanne und eine volle Kanne schnell gegeneinander ausgetauscht werden können.

Im Gegensatz dazu bezieht sich die vorliegende Erfindung auf eine Transportanordnung, bei welcher Kannen gruppenweise gewechselt werden. Insbesondere befinden sich im Betrieb stets eine vorgegebene Zahl von Kannen, aus denen Textilmaterial gleichzeitig entnommen wird, längs eines Speiseabschnitts oder Einlauftischs aufgestellt. Die Anordnung dient der arbeitsmässigen Verkettung von artgleichen Maschinen, d.h. von Maschinen, die in gleichen Zeitabschnitten gleiche Mengen von Textilmaterial verarbeiten, wie z.B. produzieren oder verbrauchen.

Aus der vorveröffentlichten EP—A—69 087 ist ebenfalls ein geschlossenes System zum Transport von gefüllten und leeren Kannen bekannt. Dabei werden die, mit Textilbändern gefüllten Kannen an der nachfolgenden Textilmaterial verarbeitenden Maschine in Reihe in einem Vorratsabschnitt hintereinander angeordnet.

Die Anordnung, bzw. die Transporteinrichtung für die Kannen ist hierbei so getroffen, dass entsprechend der ebenfalls vorveröffentlichten EP—A—45 184 der Kannenwechsel von geleerten Kannen einzeln, über die nachgeführten Reservekannen an einer Aufgabestelle des Kannengestells erfolgt.

Die in Reihe nachgeführten Reservekannen werden je nach Bedarf nachgeschoben.

Ein gleichzeitiger Wechsel der gesamten, im Kannengestell der nachfolgenden Textilmaterial verarbeitenden Maschine befindlichen Kannen, ist mit diesen Einrichtungen nicht möglich.

Anhand des bekannten Standes der Technik ist die Aufgabe der Erfindung ein geschlossenes Kannentransportsystem zu schaffen, wobei einerseits eine vorgegebene Anzahl von Kannen gleichzeitig gewechselt werden kann und eine gute Zugänglichkeit gewährleistet wird.

Diese Aufgabe wird durch den kennzeichnenden Teil des Hauptanspruches gelöst.

Weitere Vorteile insbesondere auch im Bezug auf eine platzsparende Anordnung sind anhand den nachfolgenden Unteransprüchen zu entnehmen.

Die erfindungsgemässe Anordnung hat den Vorteil einer guten Zugänglichkeit zu den Kannen und zu den angeschlossenen Maschinen zum Zweck der Bedienung derselben und zum Beheben von Fehlern und Störungen. Sie ermöglicht, die Textilmaschinen nahe aneinander zu stellen und insbesondere eine maximale Platzausnützung des Maschinensaals zu erzielen. Die Erfindung vermittelt somit optimale Bedienungs und Wartungsverhältnisse bei minimaler Platzbeanspruchung. Sie eignet sich insbesondere zur Verwendung mit Karden, Strecken und Wattenmaschinen. Dabei können Strecken und Karden die Fasermaterial liefernde und Strecken und Wattenmaschinen die Fasermaterial verbrauchende Maschine bilden.

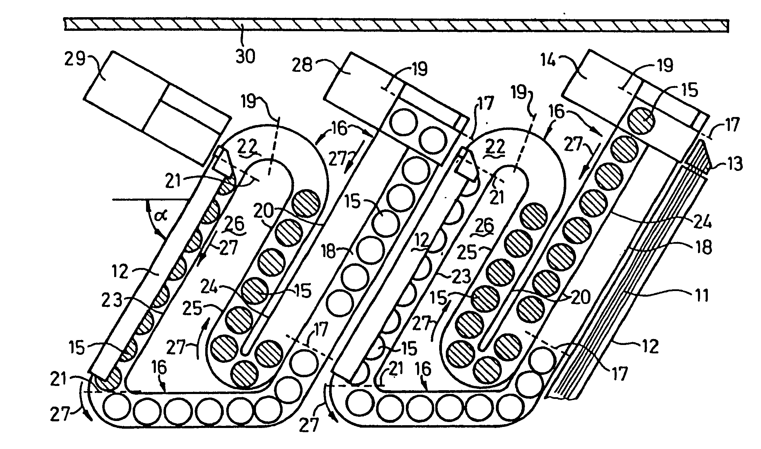

Die Erfindung sei im folgenden an einem Ausführungsbeispiel und anhand der Figur der Zeichnung näher erläutert. Diese zeigt eine schematisch gezeichnete, erfindungsgemässe Anordnung von oben gesehen. Im gezeigten Ausführungsbeispiel wurde unter den verschiedenen Möglichkeiten einer Verkettung von Maschinen eine solche von zwei Strecken und einer Wattenmaschine gewählt.

Von nicht gezeichneten Karden in konventioneller Weise gelieferte Textilbänder 11 werden auf einem zu einer Strecke 14 gehörenden Einlauftisch 12 abgelegt und über ein Umlenkglied 13 der Strecke 14 zugeführt. Das aus der letzteren austretende Textilband wird in die an der Füllstation der Strecke 14 bereitstehende Kanne 15 eingefüllt. Auf einem in sich geschlossenen Transportweg 16 befindet sich eine Vielzahl von Kannen 15. Diese werden auf diesem in der durch die pfeile 27 gegebenen Richtung transportiert. Die mit Textilmaterial, in diesem Fall mit Bändern gefüllten Kannen 15 sind schraffiert gezeichnet, die nicht mit einer Schraffierung versehenen Kannen sind leer.

Der Transportweg 16 umfasst verschiedene Abschnitte. Zwischen den Linien 17, 17 erstreckt sich ein Vorratsabschnitt 18. Zwischen den Linien 19, 19 ist ein siphonförmiger Bereitschaftsabschnitt 20 vorhanden. Im weiteren ist zwischen der, bezogen auf die Richtung der Pfeile 27, vorderen der Linien 19 und einer hinteren Linie 21 ein von stillstehenden Kannen 15 freier Abschnitt 22 vorgesehen. Der Abschnitt 22 gestattet jedoch das Durchbewegen von Kannen 15. Schliesslich befindet sich zwischen den Linien 21, 21 ein Speiseabschnitt 23. Der siphonförmige Bereitschaftsabschnitt 20 weist zwei Schenkel 24, 25 auf. Diese verlaufen unmittelbar nebeneinander. Der eine Schenkel 24 führt von der Strecke 14 weg. Zwischen dem zweiten Schenkel 25 und dem Speiseabschnitt 23 ist ein Zwischenraum 26 vorhanden. Der von stationären Kannen 15 freie Abschnitt 22 und der Zwischenraum 26 gestatten dem Bedienungspersonal eine gute Zugänglichkeit zum Speiseabschnitt 23 und zur Strecke 28 zum Zwecke des Behebens von Fehlern und Störungen. Der Vorratsabschnitt 18, die Schenkel 24, 25 des Bereitschaftsabschnitts 20 und der Speiseabschnitt 23 liegen parallel zueinander.

Im Betrieb befindet sich im Speiseabschnitt 23 stets eine vorgegebene Zahl von Kannen 15. Im gezeigten Beispiel sind dies deren acht. Diese Kannen 15 geben gleichzeitig Textilmaterial ab, indem die Bänder aus den Kannen 15 entnommen und auf einem zur Maschine 28 gehörenden, zweiten Einlauftisch 12 nebeneinander liegend (nicht gezeigt), abgelegt werden. Von diesem Tisch 12 werden sie einer zweiten Strecke 28 zugeführt und in dieser wiederum zu einem neuen Band verzogen. Diese Strecke 28 arbeitet bezüglich der bis anhin beschriebenen, in der rechten Hälfte der Figur gezeichneten Transportanordnung als Textilmaterial verbrauchende Maschine, während die Strecke 14 bezüglich dieser Transportanordnung eine Textilmaterial liefernde Maschine bildet.

Das von der Strecke 28 gelieferte Band wird wiederum in Kannen 15 eingefüllt. Der Transport dieser Kannen 15 erfolgt in der gleichen Weise, wie dies im vorhergehenden beschrieben wurde. Die dazu verwendete Transportanordnung ist in der linken Hälfte der Figur gezeigt. Sie ist mit der bereits beschriebenen identisch. In der Figur sind deshalb für die gleichen Teile der linken und der rechten Transportanordnung die gleichen Bezugszeichen verwendet worden. Von der Strecke 28 gelangen die Kannen 15 über den in der Figur links gezeichneten Transportweg 16 zum zu einer Wattenmaschine 29 gehörenden Einlauftisch 12. Von der in der Figur linken Anordnung aus betrachtet, bildet die Strecke 28 die Textilmaterial liefernde und die Wattenmaschine 29 die Textilmaterial verbrauchende Maschine. Die den Kannen 15 des in der Figur linken Speiseabschnitts 23 entnommenen, nicht gezeichneten Bänder werden auf den Einlauftisch 12 aufgebracht und gelangen von diesem zur Wattenmaschine 29. Durch die se werden die Bänder zu Watte verarbeitet.

Wenn im Betrieb der gezeigten Transportanordnung die sich in einem Speiseabschnitt 23 befindlichen Kannen 15 leer sind, müssen sie durch volle Kannen 15 ersetzt werden. Dieser Auswechslungsvorgang sei vorerst anhand der Anordnung auf der rechten Hälfte der Figur betrachtet. Als erstes werden leere Kannen 15 im unteren, in der Figur waagrecht gezeichneten Abschnitt des Transportweges 16 geholt und werden acht Kannen 15 in der durch die Pfeile 27 angegebenen Transportrichtung in den Vorratsabschnitt 18 bewegt. Anschliessen werden die acht sich im Speiseabschnitt 23 befindlichen Kannen 15 in der durch die pfeile 27 gegebenen Richtung in den unteren, waagrechten Abschnitt 18 eingeführt. Daraufhin werden die vollen Kannen 15 im Bereitschaftsabschnitt 20 in der Weise weiterbewegt, dass acht volle Kannen 15 in den Speiseabschnitt 23 eingeführt werden. Dabei wird der freie Abschnitt 22 von stationären Kannen freigehalten. Die überzähligen, vollen Kannen 15 verbleiben somit hinter der in bezug auf die Richtung der Pfeile 27 vorderen Linie 19.

Die auf der linken Hälfte der Figur gezeigte Anordnung der Kannen 15 zeigt den Zustand unmittelbar nach dem Verschieben der Kannen 15. Die Zufuhr des Textilbandes zur Kanne 15 in der Füllstation der Strecke 28 findet normalerweise ununterbrochen statt, so dass mit dem Weiterbewegen der vollen Kannen 15 im Bereitschaftsabschnitt 20 augenblicklich die erste der vorher dem Warteabschnitt 18 neu zugeführten leeren Kannen 15 in diese Füllstation bewegt wird. Nach dem Einbringen von acht vollen Kannen 15 in den Speiseabschnitt 23 der Wattenmaschine 29 kann die Entnahme von Textilmaterial aus diesen Kannen 15 wieder aufgenommen werden.

Es ist aus der Figur ersichtlich, dass der freie Abschnitt 22 zusammen mit dem Zwischenraum 26 einen für das Bedienungspersonal bequem zugänglichen Wartungsbereich bildet. Im praktischen Betrieb sind bei den Vorrats- und Bereitschaftsabschnitten 18 bzw. 20 Bedienungseingriffe sehr selten notwendig. An den Maschinen 14, 28, 29 sind solche öfters notwendig und im Speiseabschnitt 23 und am Einlauftisch 12 treten fehlerhaftes Arbeiten und die Notwendigkeit von Wartungen am häufigsten auf. Insbesondere muss in diesem Bereich nach jedem Kannenwechsel das Ansetzen der Bänder der neuen Kannen durchgeführt werden. Beim Vorliegen z.B. eines Bandbruchs zeigt sich ein solcher während des Vorgangs des Entnehmens des Bandes aus der Kanne. Die bequeme Zugänglichkeit zu den Bereichen 22 und 26 erweist sich somit als besonders wertvoll.

Die in der Fiur gezeigte, erfindungsgemäss Anordnung erlaubt, eine gewisse Reserve von Kannen 15 vorzusehen. Diese stellen einen pufferzustand dar, welcher gestattet, dass das Leerwerden der Kannen 15 im Speiseabschnitt 23 nicht genau mit dem Vollwerden der Kannen 15 im Bereitschaftsabschnitt 20 zusammenfallen muss, so dass diesbezüglich ein freier Spielraum vorhanden ist.

Die Mindestzahl der im Transportweg 16 vorhandenen Kannen 15 ist gleich dem Zweifachen der für den Speiseabschnitt 23 vorgegebenen Zahl von Kannen 15. Dies sind im gezeigten Beispiel $2 \times 8 = 16$ Kannen 15. Diese Zahl ergibt sich, weil beim Wegbewegen der acht Kannen 15 vom Speiseabschnitt 23 acht volle Kannen 15 aus dem Bereitschaftsabschnitt 20 nachgeschoben werden müssen. Während diese Textilmaterial liefern, werden die aus dem Speiseabschnitt 23 entnommenen, unmittelbar in den Vorratsabschnitt 18 bewegten Kannen 15 der Reihe nach wieder gefüllt.

Die maximale Zahl von in der Anordnung vorhandenen Kannen liegt vor, wenn der Transportweg 16 ausser im freien Durchgang 22 und ausser einer Zahl von kannenfreien Plätzen, die der vorgegebenen Zahl (acht) gleich ist, vollständig mit Kannen 15 besetzt ist. Die acht kannenfreien plätze sind notwendig für die zwischen zwei Transportbewegungen die Textilmaterial liefernde Maschine verlassenden Kannen 15.

In einer speziellen Ausführungsform der Erfindung ist der Vorratsabschnitt 18 gegen die Fasermaterial liefernde Maschine 14, 18 hin und ist der Schenkel 24 von dieser Maschine weg, abfallend ausgebildet. Wenn bei einer solchen Ausführungsform die Kannen 15 auf Rädern rollbar sind, so erleichtert dies das Zu- und Wegführen der Kannen zu den Strecken 14 und 28 und von diesen weg. Beim Anbringen von Rädern an den Kannen 15 sind vorzugsweise längs des ganzen Transportweges 16 verlaufende Führungen vorgesehen. Andererseits kann der Boden des Transportweges 16 mittels senkrecht zur Transportrichtung angeordneten, rotierbar gelagerten, zylinderförmigen Rollen als Rollbahn ausgebildet sein. Es liegt ebenfalls innerhalb vorliegender Erfindung, die Kannen 15 mittels eines automatischen Förderantriebs zu bewegen. Ein solcher wird in Abhängigkeit des Füllungsgrades der sich im Speiseabschnitt 23 befindlichen Kannen 15 gesteuert.

Eine ein Minimum an Platz beanspruchende Aufstellung der erfindungsgemässen Transportanordnung in einem Spinnsaal ergibt sich auf folgende Weise: Es sei eine Wand 30 eine der Seitenwände des Spinnsaals. Bei diesem Sachverhalt werden bei geradlinigen Vorrats- und Speiseabschnitten und bei geradlinigen Schenkeln 24, 25, diese Teile bezüglich der Saalwand 30 in der gezeigten Art unter einem gewählten Winkel α bezüglich der Seitenwand 30, angeordnet. Der Winkel α ist in der Weise gewählt, dass z.B. die von der Wand 30 entfernten Enden der Speiseabschnitte 23 alle die gleiche Entfernung von dieser Seitenwand 30 haben, wobei auch die Textilmaterial verarbeitenden Maschinen 14, 28, 29 alle die gleiche Entfernung von dieser Wand 30 haben. Zwischen dem Vorratsabschnitt 18 und dem einen Schenkel 24 des Bereitschaftsabschnitts 20 und zwischen den beiden Schenkeln 24, 25 wird ein höchstens kleiner Zwischenraum vorgesehen.

In der gezeigten Ausführungsform sind als die vorgegebene Zahl von Kannen im Speiseabschnitt 23 deren acht vorgesehen. Diese vorgegebene Zahl kann selbstverständlich auch einen anderen Wert haben.

**Patentansprüche**

1. Anordnung zum Transportieren von mit Textilmaterial gefüllten Kannen von einer Textilmaterial liefernden Maschine zu einer artgleichen, Textilmaterial verbrauchenden Maschine und von leeren Kannen der letztgenannten Maschine zurück zur erstgenannten Maschine längs eines in sich geschlossenen, verschiedene Abschnitte umfassenden Transportweges (16), welcher einen für leere Kannen vorgesehen, an der Textilmaterial liefernden Maschine (14, 28) endenden Vorratsabschnitt umfasst, wobei sich an der Textilmaterial verbrauchenden Maschine (29) eine vorgegebene Zahl von gleichzeitig Textilmaterial abgebenden Kannen (15) aneinandergereiht längs eines Speiseabschnitts (23) des Transportwegs (16) befinden, dadurch gekennzeichnet, dass der Transportweg (16) einen syphonförmigen Bereitschaftsabschnitt (20) mit zwei parallelen Schenkeln (24,25) umfasst, von denen der eine Schenkel (24) von der Textilmaterial liefernden Maschine (14,28) weggeführt und der zweite Schenkel (25) über einen von stationären Kannen (15) freien Abschnitt (22) zum Speiseabschnitt (23) hinführt, dass sowohl der Vorratsabschnitt (18) als auch der Bereitschaftsabschnitt (20) für mindestens eine der vorgegebenen Zahl gleiche Zahl von aneinandergereihten Kannen (15) bemessen sind, dass der Vorratsabschnitt (18), die Schenkel (24,25) des Bereitschaftsabschnittes (20) und der Speiseabschnitt (23) parallel zueinander liegen und dass zwischen dem zweiten Schenkel (25) und dem Speiseabschnitt (23) ein Zwischenraum (26) vorhanden ist.

2. Anordnung nach Anspruch 1, dadurch gekennzeichnet, dass der Transportweg (16) zusätzlich zum freien Abschnitt (22) mindestens eine Zahl von kannenfreien Plätzen besitzt, welche gleich der vorgegebenen Zahl ist.

3. Anordnung nach Anspruch 1, dadurch gekennzeichnet, dass die Mindestzahl der auf dem Transportweg (16) vorhandenen Kannen (15) gleich dem zweifachen Wert der vorgegebenen Zahl ist.

4. Anordnung nach Anspruch 1, dadurch gekennzeichnet, dass die Kannen (15) mit Rädern versehen sind, der Warteabschnitt (18) gegen die Textilmaterial liefernde Maschine (14, 28) hin und der eine Schenkel (24) des Bereitschaftsabschnitts (20) von der Textilmaterial liefernden Maschine (14, 28) weg, abfallend ausgebildet sind.

5. Anordnung nach Anspruch 1, dadurch gekennzeichnet, dass die Textilmaterial liefernde Maschine eine Karde oder Strecke (14, 28) ist.

6. Anordnung nach Anspruch 1, dadurch gekennzeichnet, dass die Textilmaterial verbrauchende Maschine (28, 29) eine Strecke (28) oder eine Wattenmaschine (29) ist.

7. Anordnung nach Anspruch 1, dadurch gekennzeichnet, dass der Boden des Transportwegs (16) mittels senkrecht zur Transportrichtung angeordneten, rotierbar gelagerten zylinderförmigen Rollen als Rollbahn ausgebildet ist.

8. Anordnung nach Anspruch 1, dadurch gekennzeichnet, dass die Kannen (15) mit Rädern versehen sind, welche in längs des Transportwegs (16) verlaufenden Führungen geführt sind.

9. Anordnung nach Anspruch 1, dadurch gekennzeichnet, dass der Transport der Kannen (15) mittels eines automatischen Förderantriebs betätigbar ist, welcher durch den Füllungsgrad der sich am Speiseabschnitt (23) befindlichen Kannen (15) steuerbar ist.

10. Anordnung nach Anspruch 1, dadurch gekennzeichnet, dass sowohl zwischen dem Vorratsabschnitt (18) und dem einen Schenkel (24) des Bereitschaftsabschnitts (20) als auch zwischen den beiden Schenkeln (24, 25) desselben ein höchstens kleiner Zwischenraum vorhanden ist.

11. Aufstellung der Anordnung nach Anspruch 1 in einem Maschinensaal, dadurch gekennzeichnet, dass bei mehreren aufeinanderfolgend angeordneten Textilmaterial liefernden und Textilmaterial verbrauchenden, artgleichen Maschinen (14, 28, 29) diese Maschinen (14, 28, 29) gleiche Entfernungen von einer Seitenwand (30) des Maschinensaals aufweisen und die Vorratsabschnitte (20) und die Speiseabschnitte (23) in bezug auf diese Seitenwand um einen Winkelα schräggestellt sind, bei welchem die von diesen Maschinen (14, 28) entfernten Enden der Speiseabschnitte (23) ebenfalls gleiche Entfernungen von der Seitenwand (30) aufweisen.

**Revendications**

1. Arrangement servant à transporter des pots remplis de matière textile, en provenance d'une machine délivrant de la matière textile, vers une machine de même type utilisant la matière textile, et à transporter en retour des pots vides de la machine citée en dernier vers la machine citée en premier, le long d'un chemin de transport (16) fermé en soi et comprenant différentes sections, chemin qui comprend une section de réserve qui est prévue pour les pots vides et se termine à la machine (14, 28) délivrant la matière textile, et où un nombre prédéterminé de pots (15) délivrant simultanément de la matière textile se trouvent disposés en rangée, l'un à côté de l'autre, le long d'une section d'alimentation (23) du chemin de transport (16) de la machine (29) utilisant la matière textile, caractérisé par le fait que le chemin de transport (16) comprend une section de disponibilité (20) en forme de syphon qui a deux jambes parallèles (24, 25), dont l'une des jambes (24) s'éloigne de la machine (14, 28) délivrant la matière textile, et la deuxième jambe (25) se dirige vers la section d'alimentation (23) en passant par une section (22) libre de pots en stationnement (15), et que non seulement la section de réserve (18) mais aussi la section de disponibilité (20) sont dimensionnées pour au moins un nombre prédéterminé de pots qui est égal au nombre de pots (15) disposés en rangée l'un à côté de l'autre, et que la section de réserve (18), les jambes (24, 25), la section de disponibilité (20) et la section d'alimentation (23) sont disposées parallèles entre elles, et qu'un espace intermédiaire (26) existe entre la section d'alimentation (23) et la deuxième jambe (25).

2. Arrangement selon revendication 1, caractérisé par le fait que le chemin de transport (16) possède, en plus de la section libre (22), au moins un nombre de places libres de pots qui est égal au nombre prédéterminé.

3. Arrangement selon revendication 1, caractérisé par le fait que le nombre minimum de pots (15) se trouvant sur le chemin de transport (16) est égal à la double valeur du nombre prédéterminé.

4. Arrangement selon revendication 1, caractérisé par le fait que les pots (15) sont pourvus de roulettes, et que la section de réserve (18) allant vers la machine (14, 28) délivrant la matière textile et la jambe (24) de la section de disponibilité (20) s'éloignant de la machine (14, 28) délivrant la matière textile sont agencées avec une pente descendante.

5. Arrangement selon revendication 1, caractérisé par le fait que la machine délivrant la matière textile est une carde ou un banc d'étirage (14, 28).

6. Arrangement selon revendication 1, caractérisé par le fait que la machine (28, 29) utilisant la matière textile est un banc d'étirage (28) ou une réunisseuse de rubans (29).

7. Arrangement selon revendication 1, caractérisé par le fait que le plancher du chemin de transport (16) est formé par des rouleaux de forme cylindrique fixés d'une manière rotative et disposés perpendiculairement au sens de transport.

8. Arrangement selon revendication 1, caractérisé par le fait que les pots (15) sont pourvus de roulettes qui sont guidées par des guidages s'étalant le long du chemin de transport (16).

9. Arrangement selon revendication 1, caractérisé par le fait que le transport des pots (15) est actionné par une commande de transport automatique qui est commandable par le degré de remplissage des pots (15) se trouvant dans la section d'alimentation (23).

10. Arrangement selon revendication 1, caractérisé par le fait qu'au moins un petit espace intermédiaire existe non seulement entre la section de réserve (18) et la jambe (24) de la section de disponibilité (20) mais encore entre les deux jambes (24, 25) de la même section.

11. Mise en place de l'arrangement selon revendication 1 dans une salle de machines, caractérisée par le fait que, lorsqu'il y a plusieurs machines de même type (14, 28, 29) disposées l'une après l'autre, délivrant de la matière textile et utilisant la matière textile, ces machines (14, 28, 29) sont disposées avec les mêmes distances par rapport à la paroi latérale (30) de la salle de machines, et que les sections de réserve (20) et les sections d'alimentation (23) sont disposées en biais avec un angle α par rapport à cette paroi latérale, angle α sous lequel les extrémités éloignées des sections d'alimentation (23) de ces machines (14, 28) possèdent également les mêmes distances par rapport à la paroi latérale (30).

**Claims**

1. Arrangement for transporting cans filled with textile material from a textile-material delivering machine to a similar type of textile-material using machine, and for transporting empty cans from the latter machine back to the former machine, transport being effected along a closed transport path (16) comprising various sections, the path comprising a reserve section for empty cans ending at the textile-material delivering machine (14, 28) while a predetermined number of cans (15) delivering textile material simultaneously are located in a row along a feed section (23) of the transport path (16) at the textile material using machine (29), characterised in that the transport path (16) comprises a siphon-shaped stand-by section (20) with two parallel legs (24, 25), one of these legs (24) leading away from the textile-material delivering machine (14, 28) and the second leg (25) leading to the feed section (23) via a section (22) free of stationary cans (15), in that both the reserve section (18) and the stand-by section (20) can receive at least a number of cans (15) equal to the said predetermined number and arranged un a row, in that the reserve section (18), the legs (24, 25) of the stand-by section (20) and the feed section (23) are arranged parallel to each other and in that an intermediate space (26) is provided between the second leg (25) and the fsed section (23).

2. Arrangement accordung to claim 1, charaterised in that the transport path (16) has in addition to the free section (22) at least a number of can-free locations equal to the said predetermined number.

3. Arrangement according to claim 1, characterised in that the minimum number of cans (15) provided on the transport path (16) is equal to twice the value of the said predetermined number.

4. Arrangement according to claim 1, characterised in that the cans (15) are provided with wheels and the waiting section (18) is formed with a downward inclination towards the textile-material delivering machine (14, 28) and the one leg (24) of the stand-by section (20) is formed with a downward inclination away from the textile-material delivering machine (14, 28).

5. Arrangement according to claim 1, characterised un that the textile-material delivering machine is a card or drawframe (14, 28).

6. Arrangement according to claim 1, characterised in that the textile-material using machine (28, 29) is a drawframe (28) or a sliver lap machine (29).

7. Arrangement according to claim 1, characterised in that the floor of the transport path (16) is formed as a roller conveyor by means of rotatably supported cylindrical rollers arranged at right angles to the transport direction.

8. Arrangement according to claim 1, characterised in that the cans (15) are provided with wheels which are guided in guides extending along the transport path (16).

9. Arrangement according to claim 1, characterised in that the transport of cans (15) is carried out by means of an automatic conveyor drive which is controllable by reference to the level of fill of the cans (15) located on the feed section (23).

10. Arrangement according to claim 1, characterised in that a small intermediate space at most is provided both between the reserve section (18) and the one leg (24) of the stand-by section (20) and between the two legs (24, 25) of the latter.

11. Lay-out of the arrangement according to claim 1 in a machine room, characterised in that with several successively arranged textile-material delivering and textile-material using machines (14, 28, 29) of the same type, these machines (14, 28, 29) have equal spacing from a side wall (30) of the machine room and the reserve sections (20) and the feed sections (23) are disposed at an inclination defined by an angle a relative to this side wall, such that the ends of the feed sections (23) remote from these machines (14, 28) also have equal spacings from the side wall (30).

EP 0 204 202 B1

1